# EUROPEAN PATENT APPLICATION

(11) **EP 3 269 668 A1**
(43) Date of publication of application: **17.01.2018**
(21) Application number: 17181011.2
(22) Date of filing: 12.07.2017
(51) Int. Cl.: B65G 47/14, B65G 47/252, B65G 47/256

(54) **SORTING MACHINE FOR PLASTIC CONTAINERS WITH ORIENTING DEVICE AND METHOD THEREFOR**

(30) Priority: 12.07.2016 IT 201600072858
(71) Applicant: Lanfranchi S.r.l., 43044 Collecchio (Parma) (IT)
(72) Inventor: LANFRANCHI, Mario, 43044 COLLECCHIO (PR) (IT)
(74) Representative: Dallaglio, Fabrizio

(57) **Abstract**

A sorting machine (10) for orienting a container by fall, irrespective of how it is positioned on a housing (1), involves the activation of a pendulum (6) which, leaning on the neck of the container, creates a rotation fulcrum for the container itself. The machine further comprises a control and/or reading system (4) which detects the orientation of the container, said information generating a signal that is transmitted to handling means (5) acting on the pendulum (6) defining the suitable positioning thereof for the correct orientation of the container during the fall in an underlying cradle (60).

## Description

### FIELD OF THE INVENTION

The object of the present invention is a machine for sorting and aligning bottles, containers, plastic preforms accumulated in a disorderly manner.

Said reordering is carried out with a special machine which finds application in the bottling industry, specifically upstream of the conveying lines of the bottles/plastic preforms or containers/bottles in general as it allows the sorting and alignment thereof.

### PRIOR ART

Sorting machines are known, such as those described in patent documents EP1590276, EP1601594, EP0877711.

In essence, these machines are used to sort and align the containers arranged in bulk. In a typical configuration, they include:
- a first carousel, rotating according to a vertical rotation axis, in which a plurality of housings are accommodated, adapted to receive the containers in a horizontal position;
- lifting means, adapted to bring the containers falling from a central cone to a predetermined height (greater than that of the housings) and then subsequently release them outside of the carousel, into cradles or fall hoppers that provide to their straightening;
- a second carousel, known as separators, where they fall in a vertical position and then leave aligned on a conveyor line.

The apparatus as a whole rotates according to a central vertical rotation axis and the bulk containers are made to slide towards the periphery of the carousel by means of a central cone.

The containers, once lifted and placed in the housings, have a random orientation, i.e. are arranged in a horizontal position according to two possible configurations, with the neck in one direction or another.

The usual machines that use mechanical means, such as cradles or fall hoppers, for the straightening of the containers are provided with mechanical systems generally dedicated to the specific container, which guide the fall thereof in such a way as to ensure the same final orientation of the container, preferably with the neck facing upwards.

An example of such means is described in US patent 4,949,834, in which a lever is used which interferes with the fall of the container. The position of the lever varies depending on the orientation of the container which is detected by an optical or electronic system.

In particular, the lever is located inside the fall hopper and impacts with the container at one end or at the opposite end of the hopper.

The presence of this lever, however, is an obstacle to the passage of the container, slowing the descent thereof even in those cases in which the container is already in the correct orientation.

### DESCRIPTION AND ADVANTAGES OF THE INVENTION

The technical problem underlying this invention is to provide a sorting machine, allowing overcoming the drawbacks mentioned referring to the prior art.

Within this problem, an object of the present invention is to provide a sorting machine able to make the falling movement of the containers more homogeneous.

A further object is to provide a sorting machine in which the container undergoes the fewest number of impacts during the sorting.

The object of the present invention is to provide an apparatus which allows orienting the container by fall irrespective of how it is positioned in the housing, through the activation of an abutment element, also called pendulum, where said element is movable and adapted to be inserted under the neck of the container, creating a rotation fulcrum for the container itself.

In addition, a control and/or reading system detects the orientation of the container, said information generates a signal that is transmitted to a handling means acting on the pendulum, defining the suitable positioning thereof for the correct orientation of the container during the fall in the underlying cradle.

According to further aspects, an object of the present invention is also to provide an improved sorter within the context of a simple, rational solution that reduces and unifies the components required for treating different shapes and sizes of containers.

In fact, the present invention differs from the prior art in many aspects, first of all the versatility with which it can operate on a wide range of shapes and sizes of containers.

The advantages that are obtained by the invention can be summarized in an important reduction of the equipment dedicated to the container and a reduction of size changeover time, in fact:
- it is universal for any kind of bottle, irrespective of its shape,
- it reduces the cost and size changeover time as its shape is suitable for all sizes of bottles and/or containers and/or preforms and its position adjustable in an automatic or manual mode simplifies the adaptation to different lengths of containers.

Said objects and advantages are all achieved by the sorting machine object of the present invention, which is characterized by the following claims.

### BRIEF DESCRIPTION OF THE FIGURES

This and other features will become more apparent from the following description of some of the configurations, illustrated purely by way of example in the accompanying drawings.
- Figure 1: shows a machine for sorting and aligning bottles, containers, plastic preforms accumulated in a disorderly manner, object of the present invention;
- Figure 2: shows a sectional view of a sorting machine of containers, with a plurality of housings and cradles applied on the upper carousel and a plurality of separators on the lower carousel;
- Figure 3: shows the falling and straightening steps of the container during the passage from the housing to the cradles up to the separator;

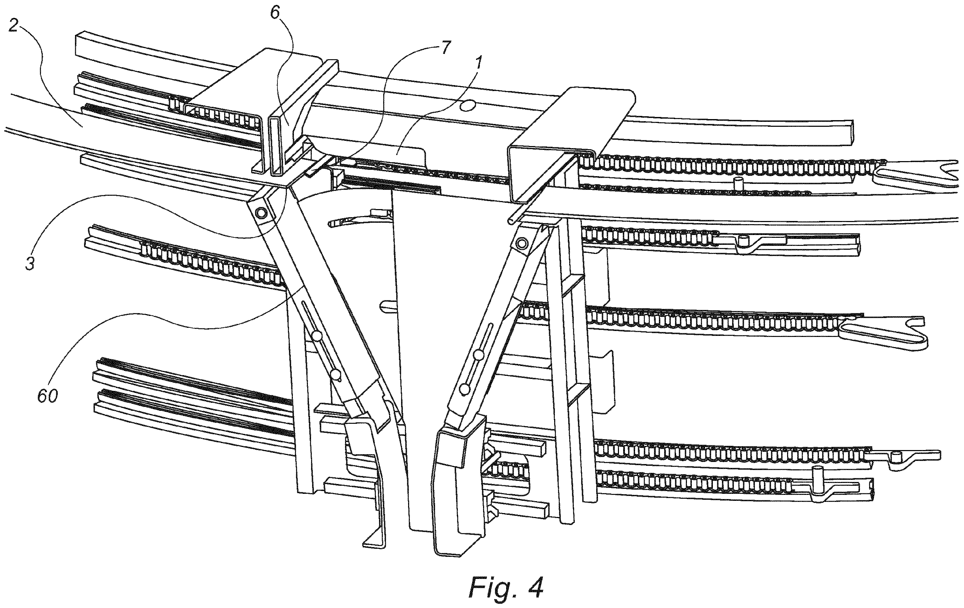

- Figure 4: shows a portion of the sorting machine with a front view of the housing and of the fall cradle;
- Figure 5: shows a perspective view of the housing only with the pendulum in a low or interference position with the neck of the container;

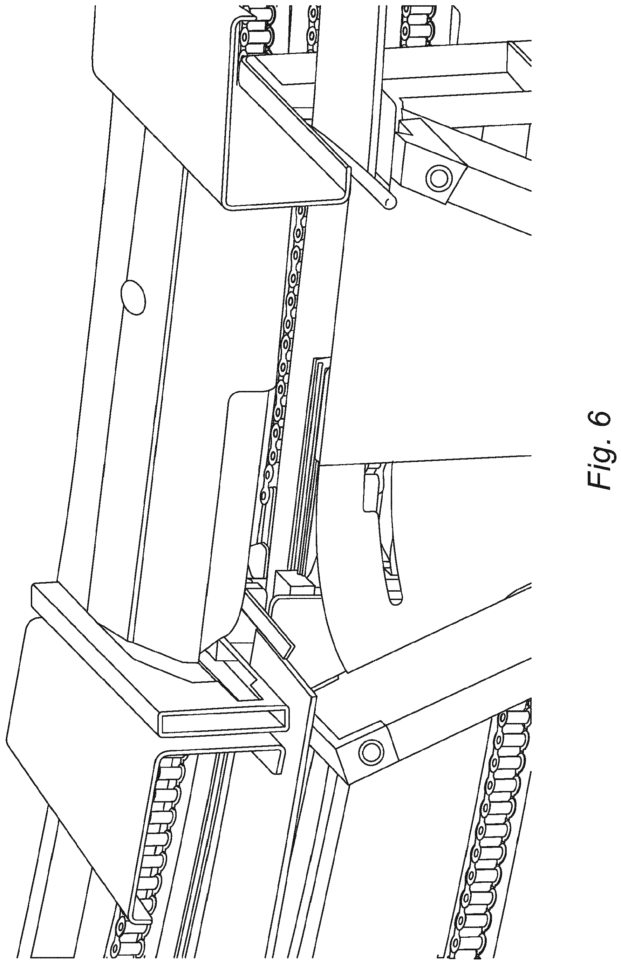

- Figure 6: shows a perspective view of the housing only with the pendulum in a high position or out of the footprint;
- Figure 7: shows a perspective view of the housing only with the pendulum in a size changeover position;
- Figure 8: shows a detail of an apparatus for checking and/or reading the orientation of the container within the housing.

### DESCRIPTION OF THE INVENTION

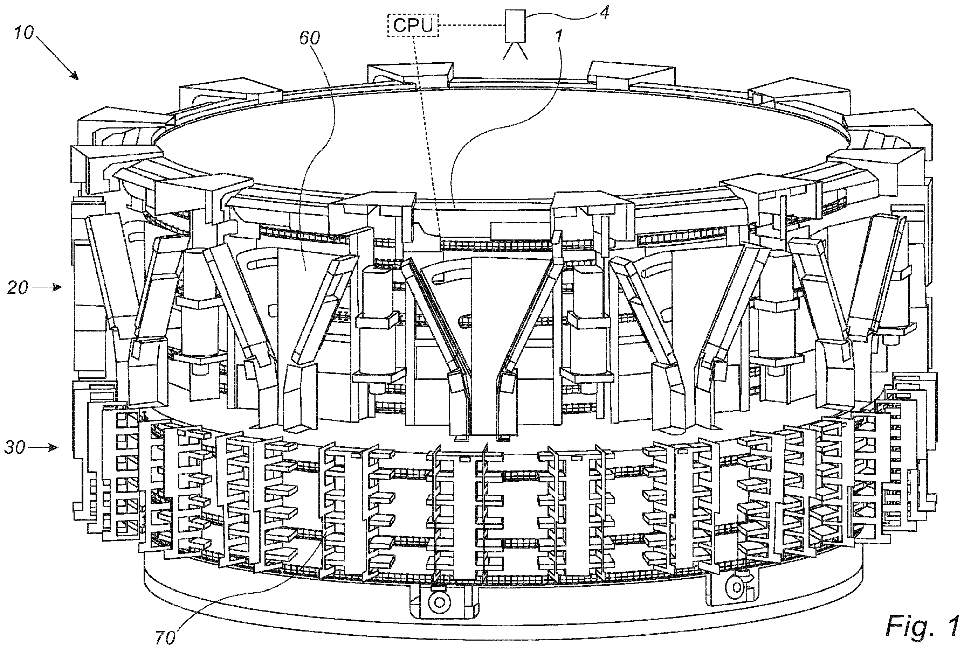

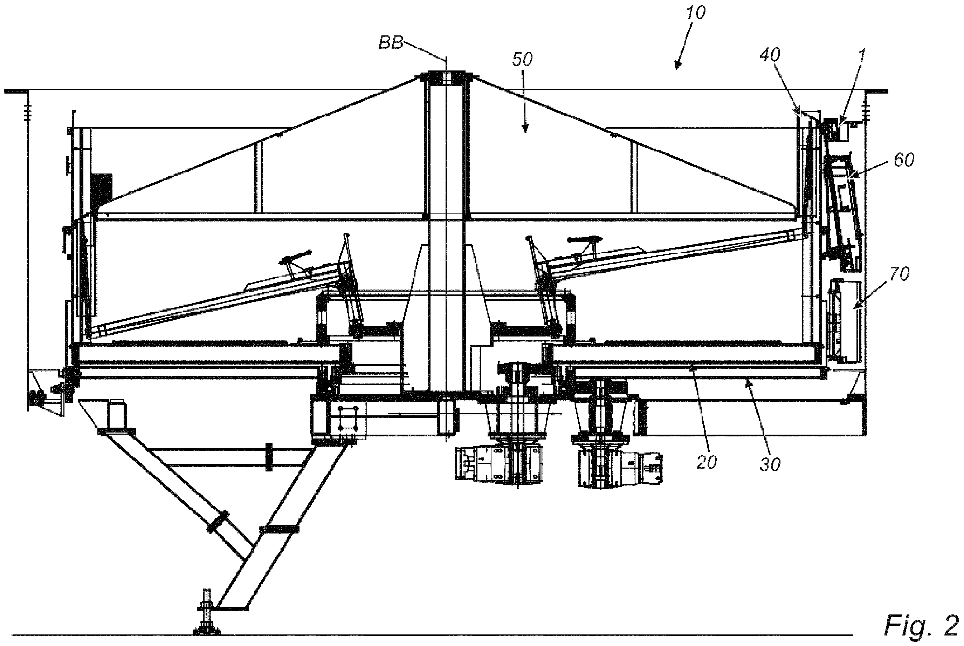

With particular reference to figures 1 and 2, reference numeral 10 denotes a sorting machine or sorter of containers (bottles, preforms, etc.) preferably of plastic. Said sorting machine 10, as known, comprises means for selecting the containers and placing them according to a suitable placement.

Said sorter of containers in bulk, rotating according to a central vertical rotation axis BB and comprising a first carousel 20 and a second carousel 30; outside of carousel 20, a plurality of housings 1 are integral, adapted to receive the containers in a horizontal position, coming from a lifting device 40, adapted to bring the containers from a central element 50 to the predetermined height corresponding to the positioning of housings 1. Below said housings 1, the containers are straightened up by means of a plurality of cradles 60, preferably also integral with the first carousel 20 and placed on the outer face thereof. The second carousel 30, also called separator carousel, where the containers, fall in a vertical position, is concentric to the first carousel 20 and comprises on the outer face thereof a plurality of separating frames 70 having the function of accommodating the container discharged from cradles 60 above.

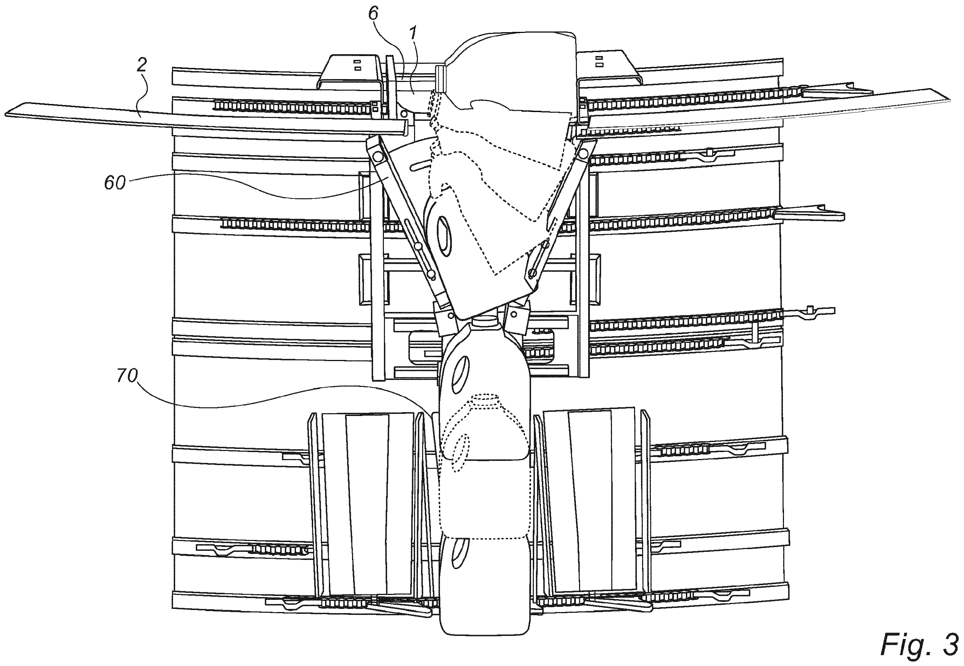

As shown in figure 3, the container within housing 1 is arranged in a horizontal position, i.e. resting on a sliding surface 2. In one embodiment, said sliding surface 2 is generally fixed, i.e. non-rotating and has at least one opening 3 through which the container falls from housing 1 to cradle 60 below.

Inside housing 1, the container has a random orientation, that is, arranged according to two possible configurations, with the neck in the advancement direction of carousel 20 or in the opposite direction; whatever the configuration assumed by the container, this must fall ensuring the same final orientation, generally with the neck facing upwards.

The object of the present invention is a sorting machine 10 which comprises a control and/or reading apparatus 4 of the orientation of the container within housing 1 and further comprises a handling mechanism 5, shown only schematically in the figure, configured for moving an abutment element 6, preferably oscillating, also called pendulum 6, within each housing 1.

The handling mechanism 5 preferably comprises an electrical cylinder of the stepper or brushless type, but any different variants such as a pneumatic cylinder are contemplated in the present invention.

The control and/or reading apparatus 4 detects the orientation of the container before it arrives at opening 3 and communicates in advance to the handling mechanism 5 the suitable positioning of pendulum 6 for the correct orientation of the container during the fall into cradle 60. In other words, the control and/or reading apparatus is preferably located upstream of opening 3 and is operatively associated with the handling mechanism 5 in a manner such as to control the positioning of pendulum 6 according to the detected orientation of the container.

This operation takes place continuously along the 360° of the machine a number of times equal to the number of falls, and thus to the number of openings of the sliding plane 2.

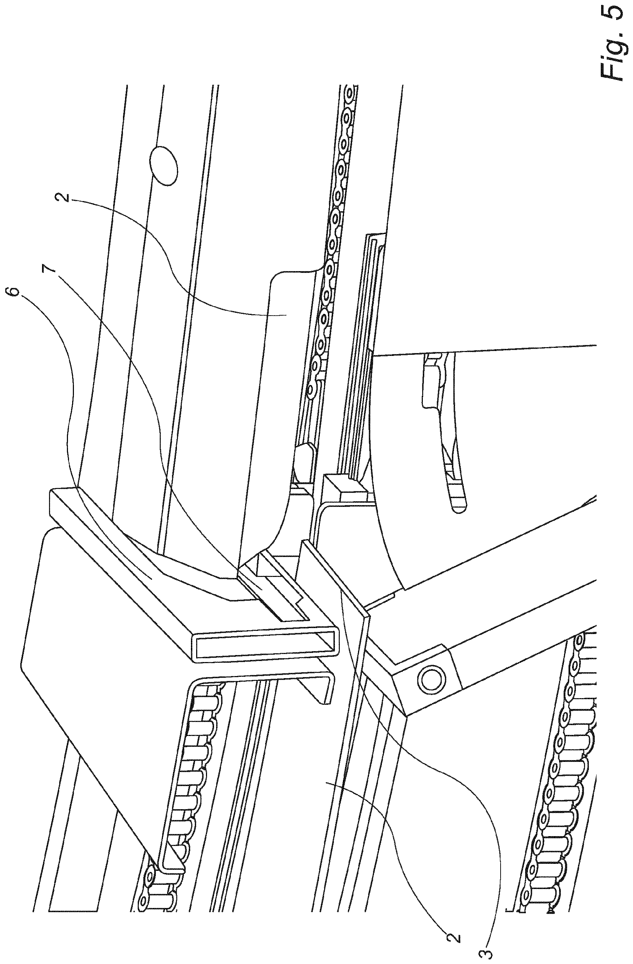

Figure 5 shows in detail the housing 1 in which pendulum 6 object of the present invention is inserted.

In a preferred embodiment, the pendulum 6 is placed above the sliding plane 2 and in a front position with respect to the direction of advancement of carousel 20, and it is intended to provide an abutment or support for the neck of the container.

To this end, pendulum 6 may comprise a support finger 7, preferably having a flat shape. According to a preferred embodiment, the support finger 7 is arranged in a radial direction with respect to carousel 20.

As can be seen in the figures, the support finger 7 is positioned below the neck and the point of contact between the container neck and the support finger 7, and it becomes the rotation fulcrum of the container during its fall into cradle 60 below.

Basically, if the container within housing 1 has the neck directed toward pendulum 6, the handling means 5 bring the pendulum 6 to the low position so that finger 7 abuts the neck of the container during advancement of the same and it is in interference with the neck of the container during its fall.

Conversely, the handling means 5 bring pendulum 6 in high position outside the footprint when the neck of the container is facing the opposite side. In this second case, the sliding plane 2 and in particular the initial surface of its opening 3 which gradually moves under housing 1, enters into contact with the neck of the container and acts as a rotation fulcrum of the container itself for its correct fall in cradle 60 below.

More generally, pendulum 6 may be positioned in two different operating configurations: a first position in which it does not interfere with the trajectory of the container or, at least, it does not abut on the neck of the container during its advancement on the carousel, does not abut on the pendulum.

A preferred embodiment provides that the handling mechanism 5, designed to obtain the movement of the pendulum, is configured for moving pendulum 6 according to a rotational movement around a fulcrum located radially to carousel 20; moreover, said handling mechanism 5 is configured for making pendulum 6, when it assumes the lower position, be idle, or free to oscillate according to its rotation fulcrum; pendulum 6 instead remains locked when it assumes the high, not-obstructing, position.

The advantage of having a support finger 7 of such a shape means that when the neck of the bottle rests on finger 7, by rotating it assumes the conformation of an inclined plane that improves the orientation and the fall of the container; in this way, it is possible to prevent that the projections often present on the neck of the container, such as the neck finish or tabs for screwing the cap, gets stuck.

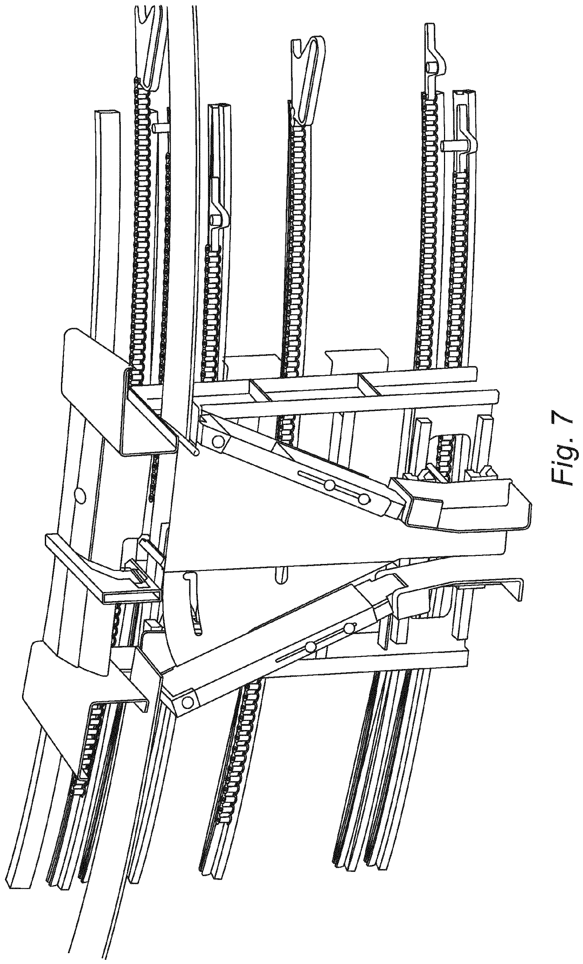

With particular reference to figure 7, pendulum 6 is adjustable horizontally in a direction tangent to carousel 20. By means of said adjustment, which may be manual or automatic, pendulum 6 is repositioned to adapt to different lengths or different conformations of the container; in this way, finger 7 always works in an optimal position on the container neck. Said movement is generally carried out with the machine stopped, during the size changeover operations.

It is understood, however, that the foregoing has a value of non limiting example, therefore, possible variants of detail that may be necessary for technical and/or functional reasons are considered to be falling within the same protection scope defined by the following claims.

In brief, the sorting machine 10 object of the present invention comprises at least one control and/or reading apparatus 4 of the orientation of the container placed within housing 1 and further comprises handling means 5 configured for moving a pendulum 6 placed inside each housing 1; the control and/or reading apparatus 4 detects the orientation of the container before it arrives at opening 3 and communicates a signal in advance to the handling means 5 which act on pendulum 6 defining the suitable placement that said pendulum 6 should assume for the correct orientation of the container during the fall in cradle 60.

Pendulum 6 is placed above the sliding plane 2 and in a front position with respect to the direction of advancement of carousel 20.

Said pendulum 6 comprises a support finger 7 having the shape of a plate; the length of said plate is arranged in radial direction to carousel 20.

Pendulum 6 rotates about a fulcrum located radially to carousel 20 and assumes two positions, associated with the two operating configurations, depending on the orientation of the container in housing 1:
a. when the neck of said container is facing pendulum 6, this assumes a low position such that the support finger 7 is positioned below the neck of the container and the point of contact between the container neck and the support finger 7 becomes the rotation fulcrum of the container during its fall into cradle 60 below;
b. when the neck of the container is facing the opposite side of pendulum 6, this assumes a high position where the support finger 7 does not obstruct the container.

Pendulum 6 in the low position is idle or free to oscillate according to its rotation fulcrum.

With this solution, the pendulum is free to oscillate and pulling back, it promotes the fall of container.

Pendulum 6 is adjustable horizontally in a direction tangent to carousel 20 as a function of the length of the container.

## Claims

1. Sorting machine or unscrambler (10) of bulk containers, wherein a plurality of bulk containers are selected, straightened up, sorted and aligned within said machine, said machine being rotary according to a central vertical rotation axis and comprising a plurality of housings (1) adapted to receive containers in a horizontal position, maintained resting on a sliding plane (2), said sliding plane (2) forming at least a ring portion and having at least one opening (3) for the fall of the containers, wherein said containers are straightened up, the sorting machine (10) being **characterized in that** each of said housings (1) is associated with at least one pendulum (6) configured to be brought into two operating configurations, a first one in which it interferes with the container when said container is placed inside said housing (1), thus creating a rotation fulcrum for the fall thereof, and a second one in which it does not interfere with the container when said container is placed inside said housing (1).

2. Sorting machine (10) according to claim 1, wherein said abutment element (6) is controllable as a function of a signal or information of at least one control and/or reading system associable to the sorting machine (10), said signal or information being function of the orientation of said container in the housing (1), said abutment element (6) being associable with at least one handling means (5) adapted to act on said abutment element (6) defining the positioning thereof within the housing (1) as a function of the signal received.

3. Sorting machine (10) according to anyone of the preceding claims, wherein said abutment element (6) comprises at least one support finger (7).

4. Sorting machine (10) according to claim 3, wherein said support finger (7) has an elongated shape, with length of said plate arranged in radial direction to the carousel (20).

5. Sorting machine (10) according to anyone of claims 2 to 4 further comprising at least one control and/or reading system or apparatus (4) which detects the orientation of the container in the housing (1) before it arrives at the opening (3).

6. Sorting machine (10) according to anyone of the preceding claims, wherein said abutment element (6) is configured to assume at least two positions corresponding to said operating configurations, as a function of the orientation of the container in the housing (1):
a. when the neck of said container is facing the abutment element (6), this assumes a lower position where the support finger (7) is positioned below the neck of the container and the point of contact between the container neck and the support finger (7) becomes the rotation fulcrum of the container during its fall;
b. when the neck of the container is facing the opposite side of the abutment element (6), this assumes a high position where the support finger (7) is out of the footprint with respect to the container.

7. Sorting machine (10) according to anyone of the preceding claims, wherein said abutment element (6) in the first operating configuration is idle, being free to retract with respect to an advancement direction of the container on said sliding plane (2).

8. Sorting machine (10) according to anyone of the preceding claims, wherein said abutment element (6) is configured for rotating about a fulcrum.

9. Sorting machine (10) according to claims 7 and 8, wherein said abutment element (6), when in the low position, is free to oscillate about its rotation fulcrum.

10. Sorting machine (10) according to anyone of the preceding claims, wherein said abutment element (6) is adjustable horizontally in a direction tangent to the carousel (20) according to the length of the container.

11. Sorting machine (10) according to claim 10, wherein said abutment element (6) comprises a sliding support (61) in a direction tangent to the carousel.

12. Sorting machine (10) according to claim 11, when dependent on claim 2, wherein said support finger (7) is located adjacent to said sliding support (61) when the abutment element (6) is in said second operating configuration.

13. Method for straightening containers in a sorting machine implemented according to one of the preceding features, the method comprises:
a. Detecting the location of the container when it is horizontally arranged inside a respective housing,
b. Sending, before the fall of said container, the information to the handling means (5) associated with the abutment element (6) adapted to interfere with the detected container,
c. Controlling or not the activation of said abutment element (6).
